# EUROPÄISCHE PATENTSCHRIFT

(11) **EP 2 376 299 B1**
(45) Veröffentlichungstag und Bekanntmachung des Hinweises auf die Patenterteilung: **12.12.2012**
(21) Anmeldenummer: 09760716.2
(22) Anmeldetag: 30.10.2009
(51) Int. Cl.: B60C 27/10, B60C 27/20

(54) **GLEITSCHUTZVORRICHTUNG FÜR FAHRZEUGRÄDER MIT ERGONOMISCHER HANDHABE**
ANTI-SKID PROTECTION DEVICE FOR VEHICLE WHEELS HAVING ERGONOMIC HANDLE
DISPOSITIF ANTIDÉRAPAGE POUR ROUES DE VÉHICULE MUNI D'UNE POIGNÉE ERGONOMIQUE

(30) Priorität: 13.01.2009 DE 102009004807
(43) Veröffentlichungstag der Anmeldung: 19.10.2011
(73) Patentinhaber: RUD Ketten Rieger & Dietz GmbH u. Co. KG, 73432 Aalen (DE)
(72) Erfinder: GRIMM, Anton, 73479 Ellwangen (DE)
(74) Vertreter: Grünecker, Kinkeldey, Stockmair & Schwanhäusser
(86) Internationale Anmeldenummer: PCT/EP2009/007781
(87) Internationale Veröffentlichungsnummer: WO 2010/081502

(56) Entgegenhaltungen:
- EP-A- 0 352 874
- EP-A- 2 050 592
- WO-A-91/03383
- WO-A-03/011618
- US-B1- 6 915 825

## Beschreibung

Die Erfindung betrifft eine Gleitschutzvorrichtung für Fahrzeugräder mit einer Befestigungseinrichtung, die ein wenigstens an einer Stelle am Fahrzeugrad festlegbares Spannorgan und eine von Hand betätigbare und auf das Spannorgan einwirkende Handhabe aufweist, wobei die Handhabe zusätzlich als ergonomisch ausgestaltetes Greifelement zum Abziehen der Gleitschutzvorrichtung vom und zum Andrücken der Gleitschutzvorrichtung gegen das Fahrzeugrad ausgestaltet ist.

Eine bekannte Bauform von Gleitschutzvorrichtungen umfasst eine Befestigungseinrichtung, mit der die Gleitschutzvorrichtung auf das Fahrzeugrad, meist der Felge, gespannt werden kann. Die Anfänge derartiger Gleitschutzvorrichtungen liegen einige Zeit zurück, wie die US 2,601,882 aus dem Jahre 1949 zeigt. Bei dieser Gleitschutzvorrichtung werden die Lauffläche des Fahrzeugrades umgreifende Traktionselemente durch in radialer Richtung durch eine Spannschraube gespannt. Die Spannschraube ist mittelbar durch die Traktionselemente in ihrer radialen Position bezüglich des Fahrzeugrades festgelegt.

Von besonderem, für die Erfindung jedoch nicht ausschließlichem Interesse sind ferner Gleitschutzvorrichtungen, die zunächst bei stillstehendem Fahrzeug von Hand auf das Fahrzeugrad vormontiert werden und sich dann beim Anrollen selbsttätig endgültig aufziehen. Solche Gleitschutzvorrichtungen sind ebenfalls bereits seit einiger Zeit bekannt, wie die US 2,730,156 zeigt. Diese Gleitschutzvorrichtung weist eine in axialer Richtung elastisch verformbare Scheibe mit Versteifungsrippen auf, welche an ihrem Umfang die Traktionslemente, bei der US 2,739,156 ist dies ein Laufgurt mit Spikes, trägt und in ihrer Mitte mittels einer Befestigungseinrichtung direkt auf das Fahrzeugrad geschraubt wird.

Bei der Montage können die Traktionselemente im Bereich der Reifenaufstandsfläche nicht zwischen Lauffläche und Boden geschoben werden, so dass an dieser Stelle die Traktionselemente neben der Lauffläche zu liegen kommen und die Scheibe axial elastisch ausgelenkt wird. Die automatische Restmontage ergibt sich, wenn beim Anrollen die Traktionselemente unter Rückverformung der Scheibe über die restliche Reifenlauffläche geschoben werden.

Dieses Grundprinzip einer sich selbst aufziehenden Gleitschutzvorrichtung ist über die Jahre in vielen Details weiter verbessert worden, wie die Gleitschutzvorrichtungen der AT-C-288 178, CH-C-509 890, DE-A-27 21 969, WO-A-84/04071, DE-A-31 42 489, DE-A-35 45 529, WO-A-2004/039611, WO-A-2008/029424 und die im "Snow Chains Catalogue 2008" der Firma Thule, Inc. dargestellte Schneekette K-SUMMIT zeigen.

Auch die EP-A-0 264 343, EP-B-298 906, EP-B-376 426, EP-B-376 427, EP-B-376 428, EP-B-460 782 und EP-B-911 193 und die in dem Katalog "ChainsAtTraction 2008/2009" unter dem Namen CENTRAX gezeigte Kette der Anmelderin betreffen sich selbst aufziehende Schneeketten.

Die bekannten Gleitschutzvorrichtungen, die eine automatische Restmontage durchführen können, weisen Spannorgane in Form von Federn oder inelastischen Zugmitteln, wie Seile oder Bänder, auf. Die Spannorgane dienen bei diesen Gleitschutzvorrichtungen dazu, die für die automatische Restmontage notwendige Spannkraft zu erzeugen. Die Spannkraft wird von Hand erzeugt, indem der Benutzer bei der Vormontage eine auf das Spannorgan einwirkende Handhabe betätigt. Dies ist bei den bekannten Gleitschutzvorrichtungen im einzelnen unterschiedlich gelöst:

So kommen beispielsweise als Handhaben bei der EP-B-460 782 eine ansetzbare Kurbel, bei der EP-B-0 376 428 und der WO-A-2004/039611 ein umlegbarer Hebel, bei der EP-B-376 426 ein Zugknopf und bei der Schneekette K-SUMMIT ein Ratschenhebel zum Einsatz. Als Spannorgane sind federelastische Bauteile, wie Elastomer- oder Drahtfedern, oder aber inelastische Bauteile wie Seile, Schrauben, Gurte oder Bänder bekannt. Bei ersteren wird die Spannkraft für die automatische Restmontage dadurch erzeugt, dass direkt durch die Betätigung der Handhabe das Bauteil verformt wird. Bei letzteren wird über die Handhabe und das Spannorgan ein Federelement mittelbar verformt; als Federn können hier insbesondere die Haltearme dienen, mit denen die Traktionselemente aufgespannt werden.

Bei der WO-A-2008/029424 wird das Spannorgan, ein Seil, vor der Montage von Hand gegen eine Federkraft ausgezogen und arretiert. Die Gleitschutzvorrichtung wird anschließend montiert und dann die Arretierung des Spannorgans gelöst, so dass die Spannkraft die automatische Restmontage bewerkstelligen kann. Eine weitere Handhabe dient dazu, die Haltearme für die Traktionselemente radial zu verstellen, um die Gleitschutzvorrichtung an unterschiedliche Reifendurchmesser anzupassen.

Des Weiteren ist in der EP 2 050 592 A1 eine Gleitschutzvorrichtung mit Haltearmen gezeigt, die mittels an einer drehbaren Halterung ausgeformter spiralförmiger Kanäle gespannt werden können. Die EP 0 352 874 A2 zeigt eine Gleitschutzvorrichtung mit einem Drehknopf, der mit Hebeln zusammenwirkt, die Spannorgane spannen. In der WO 03/011618 A1 ist eine Gleitschutzvorrichtung mit einer zentral am Fahrzeugrad angeordneten Halterung für vier von Drahtbügeln gebildete Haltearme beschrieben, wobei ein Spannstrang über Umlenkungen zu einem Spannhebel geführt ist. Aus der WO 91/03383 A ist eine Gleitschutzvorrichtung bekannt, die Haltearme mit als Zahnstangen ausgeführten Enden aufweist, welche in einer zentral am Fahrzeugrad angeordneten Halterung aufgenommen sind. Die US 6,915,825 B1 zeigt eine Gleitschutzvorrichtung mit Laufnetz, das über eine konzentrisch zur Fahrzeugachse angeordnete Spannvorrichtung gehalten ist, wobei mit dem Laufnetz verbundene Spannseile auf einer zentral am Fahrzeugrad angeordneten Spannrolle aufgewickelt sind, die über einen Griff betätigt werden kann.

Obwohl, wie aus dem oben angeführten Stand der Technik hervorgeht, die Gleitschutzvorrichtungen mit Befestigungseinrichtung und Spannorgan hinsichtlich ihrer Benutzerfreundlichkeit gegenüber ihren Anfängen stark verbessert sind, ist eine einfachere, werkzeugfreie Handhabung bei Montage und Demontage nach wie vor wünschenswert.

Der Erfindung liegt folglich das Problem zugrunde, die bekannten Gleitschutzvorrichtungen dahingehend zu verbessern, dass ihre Handhabung weiter vereinfacht wird. Dieses Problem löst die Erfindung für eine Gleitschutzvorrichtung der eingangs genannten Art dadurch, dass die Befestigungseinrichtung eine von der Handhabe antreibbar ausgestaltete Aufwickeleinrichtung umfasst, durch die das Spannorgan aufwickelbar ist.

Gegenüber den vorbekannten Gleitschutzvorrichtungen dient die Handhabe somit nicht nur zur Betätigung des Spannorgans, sondern aufgrund ihrer ergonomischen Ausgestaltung als Greifelement auch zum Abziehen und Andrücken der Gleitschutzvorrichtung. Die erfindungsgemäße Lösung ermöglicht somit die Betätigung des Spannorgans in einem Handgriff im Zuge der Montage beim Andrücken bzw. im Zuge der Demontage beim Abziehen, ohne dass die Hand von der Handhabe genommen werden muss.

Die erfindungsgemäße Lösung kann durch eine Reihe von voneinander jeweils unabhängigen Ausgestaltungen weiter verbessert werden. Diese Ausgestaltungen und die damit verbundenen Vorteile sind im Folgenden kurz beschrieben.

So kann in einer ersten vorteilhaften Ausgestaltung die ergonomische Ausgestaltung des Greifelements das Andrücken der Gleitschutzvorrichtung bei der Montage angenehmer gestalten, wenn die Handhabe eine in axialer Richtung vom Fahrzeugrad weg weisende Andrückfläche aufweist. Die Andrückfläche kann insbesondere im Wesentlichen glatt, also ohne störende Vorsprünge oder Ausnehmungen, ausgestaltet sein. Eine solche Andrückfläche ermöglicht es, die Handhabe bei der Montage mit der Hand bequem gegen den Reifen zu drücken. Die glatte Ausgestaltung der Andrückfläche vermeidet es, dass sich Kanten und Ecken dabei in die Handfläche bohren können. Die Größe der Andrückfläche kann insbesondere etwa der Größe einer durchschnittlichen Handfläche entsprechen.

Das Abziehen der Gleitschutzvorrichtung vom Fahrzeugrad wiederum kann durch eine ergonomisch ausgestaltete Zugfläche an der Handhabe vereinfacht werden. Die Zugfläche kann im montierten Zustand zum Fahrzeugrad weisen und somit die Finger eines Benutzers beim Ziehen an der Handhabe gut abstützen. Insbesondere kann die Zugfläche von wenigstens einer Griff- und/oder Fingermulde gebildet sein, um eine für den Benutzer angenehmere Haptik zu ermöglichen.

Eine ergonomische Ausgestaltung der Handhabe ergibt sich insbesondere bei einer knauf- oder pilzförmigen Ausgestaltung. So kann sich die Handhabe im montierten Zustand pilzförmig vom Fahrzeugrad weg erstrecken, so dass der schmalere Bereich der Handhabe auf der Seite des Fahrzeugrades liegt und die knopfartige Erweiterung zum Benutzer weist. Diese Ausgestaltung bietet ebenfalls eine ergonomisch günstige Ausgestaltung zum Aufbringen einer Zug- und einer Druckkraft durch die Hand eines Benutzers während der Montage und Demontage der Gleitschutzvorrichtung.

Ferner kann die Gleitschutzvorrichtung einen durch die Handhabe antrieb- bzw. betätigbaren, insbesondere selbstsperrenden Spannmechanismus für das Spannorgan aufweisen. Bei einer derartigen Ausgestaltung ist es von Vorteil, wenn die Handhabe einen von Hand betätigbaren, auf den Spannmechanismus einwirkend ausgestalteten Entriegelungsschalter umfasst, so dass der Spannmechanismus durch einen Benutzer gespannt und gelöst werden kann, ohne dass er die Hand von der Handhabe nehmen muss.

Der Entriegelungsschalter kann als ein eindrückbarer Knopf oder Schalter beispielsweise im Bereich der Andrückfläche ausgestaltet sein. Um jedoch die beim Abziehen der Gleitschutzvorrichtung vom Benutzer aufgebrachte Zugkraft synergetisch zum Lösen des Spannmechanismus zu verwenden, kann vorteilhafterweise die Handhabe selbst den Entriegelungsschalter ausbilden.

Gemäß einer weiteren vorteilhaften Ausgestaltung kann das Spannorgan ein Zugmittel umfassen, das an wenigstens einer Stelle am Fahrzeugrad festlegbar und an wenigstens einer anderen Stelle an der Gleitschutzvorrichtung festgelegt ist. Derartige Zugmittel können inelastische oder elastische Bänder, Gurte, Seile oder Ketten oder Kombinationen davon sein. Selbstverständlich können auch andere aufwickelbare Körper als Spannorgan verwendet werden. Durch das Aufwickeln des Spannorgans kann auf einfache Weise eine Spannkraft erzeugt werden, welche die Gleitschutzvorrichtung am Fahrzeugrad hält und/oder die Gleitschutzvorrichtung beim Anrollen automatisch auf das Fahrzeugrad zieht.

Um auf konstruktiv einfache Weise den Spannmechanismus und insbesondere die Aufwickeleinrichtung zu betätigen, kann die Handhabe drehbar, beispielsweise als Drehknopf, ausgestaltet sein.

Damit die Handhabe alle bei der Bedienung der Gleitschutzvorrichtung von Hand durchzuführenden Tätigkeiten mit einem Handgriff ohne Fehlbedienungen ermöglicht, kann gemäß einer weiteren vorteilhaften Ausgestaltung vorgesehen sein, dass die Handhabe in wenigstens zwei unterschiedliche, vorzugsweise aufeinander senkrecht stehende Betätigungsrichtungen beweglich geführt ist. In der einen Betätigungsrichtung ist der Spannmechanismus antreibbar und in der anderen Betätigungsrichtung ist der Spannmechanismus entriegelbar. Wie oben bereits geschildert, kann dabei die Betätigungsrichtung zum Antreiben des Spannmechanismus eine Drehbewegung in der einen Ebene sein. Die Betätigungsrichtung zum Entriegeln des Spannmechanismus kann, vorzugsweise gegen eine Federkraft, senkrecht zu der Drehebene verlaufen und vorzugsweise weg vom Fahrzeugreifen weisen.

Um einem Benutzer anzuzeigen, dass bei der Vormontage die für die automatische Restmontage erforderliche Spannkraft erreicht ist, kann in die Handhabe ein Indikatorelement integriert sein, das bei Überschreiten einer vorbestimmten auf das Spannorgan einwirkenden Spannkraft von einer Neutralstellung in eine Anzeigestellung überführbar ausgestaltet ist. In der Anzeigestellung kann eine Alarmmarkierung des Indikatorelements von außen einsehbar angeordnet sein, während sie in der Neutralstellung verdeckt angeordnet ist.

Gemäß einer weiteren vorteilhaften Ausgestaltung kann die Handhabe ein Indikatorelement aufweisen, das in Abhängigkeit von der im Spannorgan herrschenden Spannkraft beweglich ausgebildet ist. Diese Ausgestaltung ermöglicht es, dem Benutzer durch die Bewegung einen Hinweis zu geben, ob er aufgrund der Betätigung der Handhabe eine für die sichere automatische Restmontage mindestens notwendige Betriebsspannkraft erzeugt hat und somit die Vormontage erfolgreich abgeschlossen ist. Durch diese Maßnahme kann die Gefahr von Fehlbedienungen, insbesondere von einer nur unvollständigen Vormontage, bei der die Gleitschutzvorrichtung nur lose am Fahrzeugrad sitzt, verringert werden. Beispielsweise kann ein in Alarmfarbe gekennzeichnetes Warnelement so lange sichtbar bleiben, wie die Betriebsspannkraft im Spannorgan nicht erreicht ist.

Schließlich ist es von Vorteil, wenn die Handhabe in radialer Richtung der Gleitschutzvorrichtung mittig, bei montierter Gleitschutzvorrichtung vorzugsweise koaxial zum Fahrzeugrad bzw. zur Nabe angeordnet ist. Bei dieser Ausgestaltung lassen sich beim Andrücken und Abziehen der Gleitschutzvorrichtung über die Handhabe die Kräfte jeweils symmetrisch in die Gleitschutzvorrichtung einleiten, so dass diese gleichmäßig aufgedrückt oder abgezogen werden kann. Außerdem lässt sich so das Spannorgan mittig und ebenfalls koaxial zum Fahrzeugrad in Richtung zum Fahrzeugrad führen. Dies führt zu konstruktiv unproblematischen Lösungen einer sich im Betrieb der Gleitschutzvorrichtung automatisch ergebenden Überwanderung des Fahrzeugrades durch die Gleitschutzvorrichtung, also eine Relativdrehung der Gleitschutzvorrichtung relativ zum Reifen.

Im Folgenden ist die Erfindung anhand von unterschiedlichen Ausführungsformen mit Bezug auf die Zeichnungen beispielhaft erläutert, wobei die bei den beiden Ausführungsformen unterschiedlichen Merkmale unabhängig voneinander und beliebig gegeneinander ausgetauscht werden können, sollte es bei der Umsetzung der Erfindung in die Praxis auf den mit dem jeweiligen Merkmal verbundenen Vorteil nicht ankommen.

Es zeigen:
- Fig. 1: eine erfindungsgemäße Gleitschutzvorrichtung in einer schematischen Perspektivansicht;
- Fig. 2: eine Ausführungsform der Handhabe in einer schematischen, perspektivischen Schnittdarstellung;
- Fig. 3: die Handhabe der Fig. 2 in einer schematischen, perspektivischen Schnittdarstellung in teilweise transparenter Darstellung;
- Fig. 4: eine weitere Ausführungsform der Handhabe in einer schematischen, perspektivischen Schnittdarstellung.

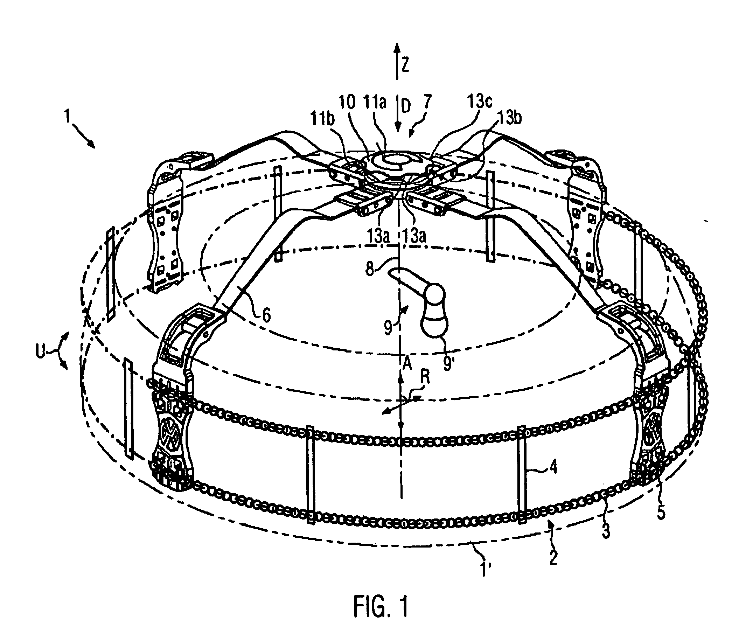

Zunächst wird der Aufbau der erfindungsgemäßen Gleitschutzvorrichtung 1, beispielsweise eine Schneekette, mit Bezug auf die Fig. 1 beschrieben. In Fig. 1 ist das Fahrzeugrad 1' der Einfachheit halber lediglich schematisch dargestellt.

Die Gleitschutzvorrichtung 1 weist Traktionselemente 2 auf, die im montierten Zustand der Gleitschutzvorrichtung 1 auf der Reifenlauffläche, und somit auch im Bereich der Reifenaufstandsfläche, zwischen Fahrzeugrad und Untergrund zu liegen kommen und die Traktion auf rutschigem Untergrund erhöhen. Die Traktionselemente 2 können, wie in Fig. 1 schematisch dargestellt ist, ein Laufnetz 2' mit Kettensträngen 3 und Querstegen 4 sowie Halteelementen 5 umfassen.

Die Traktionselemente 2 werden über wenigstens ein Halteorgan 6, beispielsweise in Form einer elastisch auslenkbaren Scheibe oder, wie gezeigt, in Form von speichenför migen Haltearmen in Position gehalten, die in axialer Richtung elastisch auslenkbar sein können.

Das Laufnetz 2 ist über das wenigstens eine Halteorgan 6 und eine Befestigungseinrichtung 7 am Fahrzeugrad verankert. Die Befestigungseinrichtung 7 kann, wie in Fig. 1 dargestellt, in radialer Richtung R mittig angeordnet sein, so dass sie bei montierter Gleitschutzvorrichtung 1 koaxial zum Fahrzeugrad im Bereich der Nabe zu liegen kommt.

Die Verankerung der Gleitschutzvorrichtung 1 am Fahrzeugrad erfolgt über ein Spannorgan 8, das ein Zugmittel 9a, beispielsweise ein Drahtseil, umfassen kann. Bei der dargestellten Ausführungsform weist das Spannorgan 8 ferner ein hebelförmiges Anschlussteil 9b mit einer Klemmvorrichtung 9c, die an einer Radmutter oder Radschraube befestigt wird, auf. Das Zugmittel 9a ist vorzugsweise drehbar mit dem Anschlussteil 9b verbunden, so dass die Gleitschutzvorrichtung 1 das Fahrzeugrad in Umfangsrichtung U im Betrieb überwandern kann, ohne dass das Zugmittel 9a verknotet.

Zur Betätigung des Spannorgans 8 weist die Befestigungseinrichtung 7 mittig eine Handhabe 10 auf, die im Hinblick auf ein Abziehen der Gleitschutzvorrichtung 1 vom Fahrzeugrad in eine in axialer Richtung A vom Fahrzeugrad weg weisende Zugrichtung Z und ein Andrücken der Gleitschutzvorrichtung 1 gegen das Fahrzeugrad in eine in axialer Richtung A zu Fahrzeugrad weisende Andrückrichtung D ergonomisch ausgestaltet ist. Gleichzeitig kann ein Benutzer über die Handhabe 10 auf das Spannorgan 8 einwirken, um die zur Montage der Gleitschutzvorrichtung erforderliche Spannkraft zu erzeugen. Insbesondere weist die Handhabe 10 eine ergonomisch ausgestaltete, im montierten Zustand vom Fahrzeugrad in axialer Richtung A weg weisende Andrückfläche 11a auf, die etwa handflächengroß ist. Eine ergonomisch günstige Ausgestaltung als Greifelement 10' ergibt sich beispielsweise durch eine im wesentlichen glatte Ausgestaltung ohne Vorsprünge oder Ausnehmungen, die sich in eine auf der Andrückfläche 11a aufliegende Handfläche drücken können. Die Andrückfläche 11a kann ferner leicht ballig ausgestaltet sein, um sich beim Andrücken besser in die Handfläche zu schmiegen.

Um das Abziehen der Gleitschutzvorrichtung 1 vom Fahrzeugrad in Zugrichtung Z von Hand ohne Werkzeug zu erleichtern, kann die Handhabe eine im montierten Zustand in axialer Richtung A zum Fahrzeugrad weisende, ergonomisch ausgestaltete Zugfläche 11 b aufweisen. Eine solche Zugfläche 11 b ergibt sich beispielsweise durch eine Hinterschneidung 12 der Handhabe in axialer Richtung, so dass eine in Umfangsrichtung U verlaufende Griff- und/oder Fingermulde entsteht. Durch die Hinterschneidung 12 weist die Handhabe 10 bei der Ausführungsform der Fig. 1 einen im wesentlichen pilzförmigen Aufbau auf.

Die Handhabe 10 kann ferner vorzugsweise in Umfangsrichtung U drehbar ausgestaltet sein, um das Spannorgan 8 zu betätigen. Um die Drehung der Handhabe 10 per Hand zu erleichtern, können in Umfangsrichtung U weisende Stützflächen 13a vorgesehen sein, welche die Finger beim Drehen der Handhabe 10 abstützen. Bei der Ausführungsform der Fig. 1 sind die Stützflächen 13a in Form von sich in axialer Richtung A erstreckenden, äquigonal in Umfangsrichtung U verteilte Finger- und/oder Griffmulden 13b an der kopfförmigen Erweiterung der Handhabe 10 bereitgestellt. Die Griffmulden 13b enden in der sich in Umfangsrichtung U erstreckenden Hinterschneidung 12, so dass die Finger die entstehenden Vorsprünge 13c zwischen den Griffmulden 13b umgreifen und leichter Halt finden können.

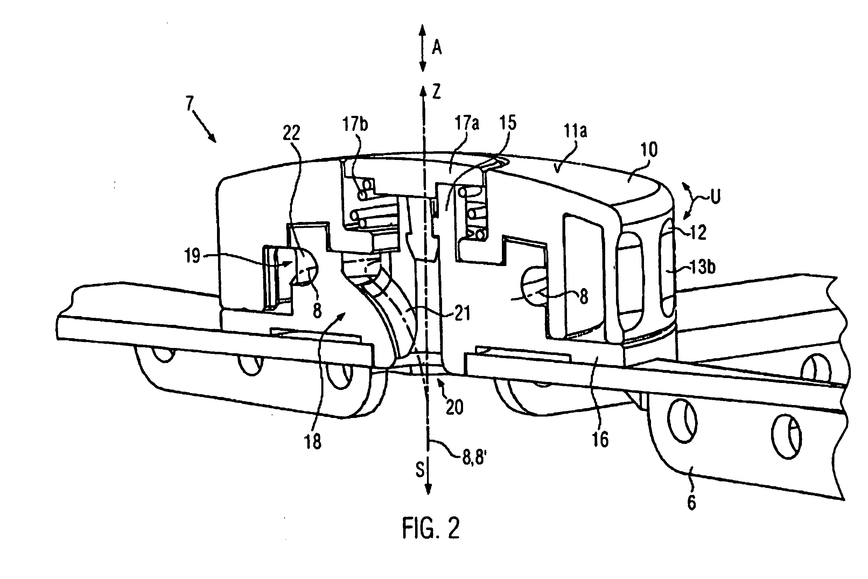

Die Handhabe 10 ist zusätzlich in Zugrichtung Z gegen eine Federspannung um einen vorbestimmten Hub beweglich geführt, wie im Folgenden mit Bezug auf die Ausführungsform der Fig. 2 erläutert ist.

Die Fig. 2 zeigt perspektivisch und in Schnittdarstellung eine weitere Ausgestaltung der Handhabe 10. Der Einfachheit halber sind in der Fig. 2 die Bezugszeichen der Fig. 1 übernommen.

Die Handhabe 10 der Fig. 2 ist gegenüber der Handhabe 10 der Fig. 1 leicht unterschiedlich ausgestaltet, indem sie keine in Umfangsrichtung U umlaufende Griffmulde 13b aufweist, sondern im Wesentlichen kappenförmig mit einer im Wesentlichen kreiszylindrischen Umfangsfläche ausgestaltet ist, die in regelmäßigen Abständen mit Griffmulden 13b versehen ist, die sowohl Halt für das Abziehen der Gleitschutzvorrichtung als auch für das Drehen der Handhabe 10 bieten sollen.

Die Handhabe 10 ist in Umfangsrichtung U drehbar um einen Zapfen 15 eines Sockelelementes 16 geführt. In Zugrichtung Z ist die Handhabe 10 ebenfalls durch das Sockelelement 16 geführt. Ein beispielsweise mit dem Sockelelement 16 verrasteter stopfenförmiger Anschlag 17a verhindert, dass die Handhabe 10 beim Abziehen der Gleitschutzvorrichtung 1 vom Fahrzeugrad 1' in Zugrichtung Z vom Sockelelement 16 abgezogen werden kann. Ein Federelement 17b, beispielsweise eine Konusfeder, drückt die Handhabe 10 entgegen der Zugrichtung Z in Richtung des Fahrzeugrades auf das Sockelelement 16.

Das Federelement 17b kann, wie Fig. 2 zeigt, koaxial um den Zapfen 15 gelegt sein und sich zwischen Anschlag 17a und Handhabe 10 abstützen. Um die Gleitschutzvorrichtung 1 bei der Montage fest an das Fahrzeugrad 1' zu ziehen, ist die Befestigungseinrichtung mit einem Spannmechanismus 18 versehen, auf den die Handhabe 10 einwirkt. Durch Betätigen des Spannmechanismus 18 mittels der Handhabe 10 wird eine vom in Fig. 2 lediglich schematisch dargestellten Spannorgan 8 vermittelte Spannkraft S zwischen der Gleitschutzvorrichtung 1 und der Felge erzeugt. Der Spannmechanismus 18 kann eine Aufwickeleinrichtung 19 für das Spannorgan 8 aufweisen, die wie folgt aufgebaut ist.

Durch eine zentrale Öffnung 20 im Sockelelement 16 tritt das Spannorgan 8 in die Befestigungseinrichtung 7 im Wesentlichen in axialer Richtung A ein und wird durch einen von der axialen Richtung A in Umfangsrichtung U gekrümmten Führungskanal 21 im Sockelkörper 16 zu einem ringförmigen Wickelkanal 22 geführt. An einer Stelle ist das Spannorgan 8 mit der Handhabe 10 verbunden, so dass es durch Drehung der Handhabe 10 in Umfangsrichtung U durch den Führungskanal 21 in den Wickelkanal 22 gezogen und dort aufgewickelt wird. Um die Reibung zwischen dem Spannorgan 8 und dem Sockelelement 16 sowie der Handhabe 10 und dem Sockelelement 16 zu verringern, ist das Sockelelement 16 vorzugsweise aus einem abriebbeständigen Kunststoff mit niedrigem Reibungsbeiwert, beispielsweise einem Kunststoff wie beispielsweise glasfaserverstärktes Polyamid, gefertigt.

Durch das Aufwickeln des Spannorgans 8 bei auf der Felge montiertem Anschlussteil 9a wird die Befestigungseinrichtung 7 unter elastischer Verformung der Halteorgane 6 an das Fahrzeugrad gezogen. Ober die Handhabe 10 treibt ein Benutzer die Aufwickeleinrichtung 19 an, so dass eine Spannkraft S entsteht, welche beim Anfahren des Fahrzeuges die Gleitschutzvorrichtung 1 selbsttätig auf das Fahrzeugrad aufzieht und diese im Betrieb auch bei Kurvenfahrt dort hält.

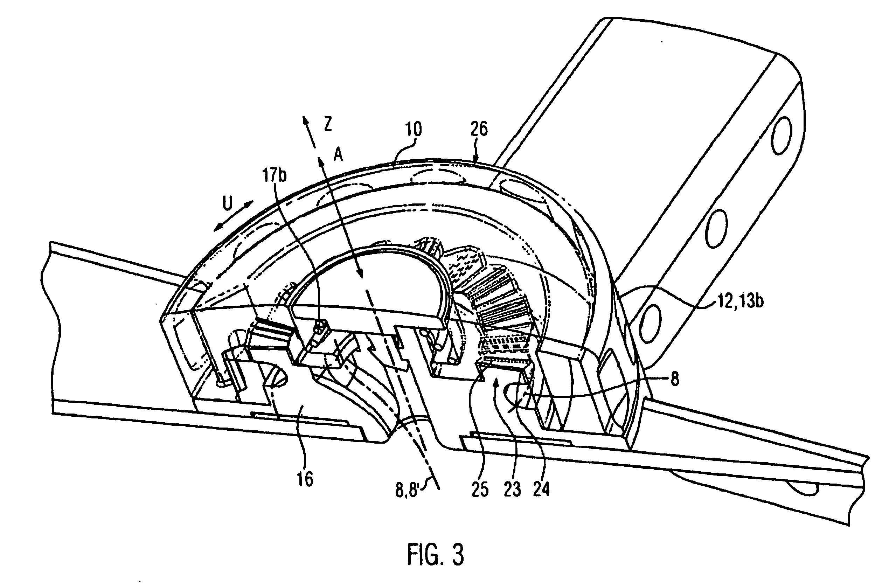

Die Selbstsperrung des Spannmechanismus S wird durch ein Rastgesperre 23 erreicht, das beispielsweise in Form zweier gegeneinander drehbarer, in axialer Richtung A weisender Sägezahnprofile 24, 25 ausgebildet sein kann, wie in Fig. 3 gezeigt ist.

Das eine Sägezahnprofil 24 ist am Sockelelement 16 ringförmig mit in axialer Richtung A weg vom Fahrzeugrad vorspringenden Sägezähnen ausgebildet. Das andere Sägezahnprofil 25 ist an der Handhabe 10, die in Fig. 3 transparent dargestellt ist, ausgebildet und befindet sich im Eingriff mit dem Sägezahnprofil 25 des Sockelelements 16. Die Form der Sägezahnprofile 24, 25 ist so gewählt, dass die Selbstsperrung eintritt, wenn eine das Spannorgan 8 abwickelnde Spannkraft S auf das Spannorgan 8 wirkt.

Beim Aufwickeln des Spannorganes 8 gleiten die Sägezahnprofile 24, 25 unter axialer Auslenkung der Handhabe 10 gegen die Wirkung des Federelements 18 aneinander vorbei. Eine zufällige Rückdrehung der Handhabe in die Gegenrichtung ist nicht möglich, weil das Federelement 17b die Handhabe 10 mit dem Sägezahnprofil 25 auf das Sägezahnprofil 24 des Sockelelementes 16 drückt.

Zum Entriegeln des Spannmechanismus 18 muss die Handhabe 10 in eine zweite, von der Betätigungsrichtung beim Betätigen des Spannmechanismus 18 unterschiedliche Richtung bewegt werden. Bei der Ausführungsform der Fig. 3 erfolgt dies dadurch, dass die Handhabe 10 entgegen der Wirkung des Federelements 17b in Zugrichtung Z vom Sockelelement 16 abgehoben wird. Diese Betätigungsrichtung verläuft senkrecht zur Betätigungsrichtung beim Aufwickeln und insbesondere entgegengesetzt zur Andrückrichtung D, so dass eine zufällige Entriegelung und damit eine Fehlbedienung beim Andrücken der Gleitschutzvorrichtung 1 vermieden wird. Gleichzeitig wird automatisch beim Abziehen der Gleitschutzvorrichtung 1 vom Fahrzeugrad mittels der Handhabe 10 der Spannmechanismus 18 entriegelt. Die Handhabe 10 dient somit beim beschriebenen Ausführungsbeispiel als Entriegelungsschalter 26 für den Spannmechanismus.

Das Sockelelement 16 kann, wie in den Figuren gezeigt ist, auf einem Trägerelement 27 befestigt, beispielsweise aufgeclipst sein. Am Trägerelement 27 sind die Halteorgane 6 angebracht. Außerdem ist das Sockelelement 16 gegenüber dem Trägerelement 27 vorzugsweise nicht drehbar.

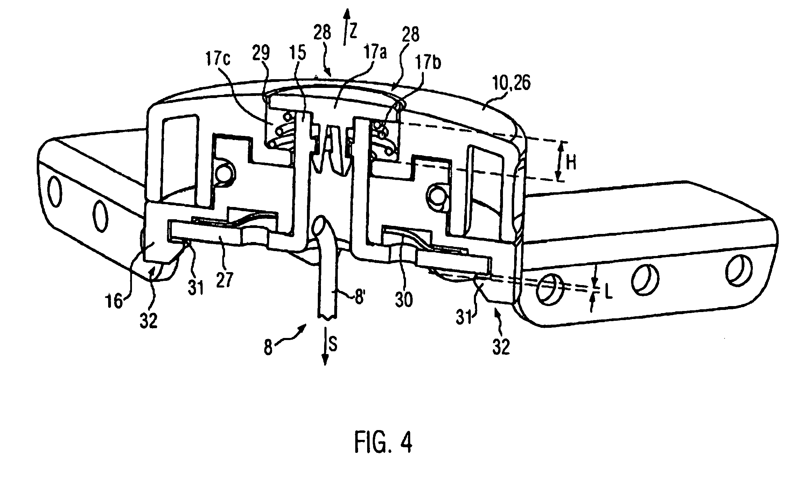

Die Fig. 4 zeigt eine weitere Ausführungsform der Erfindung, wobei wieder der Einfachheit halber die Bezugszeichen der Fig. 1 bis 3 verwendet sind. Die Ausführungsform der Fig. 4 unterscheidet sich von der Ausführungsform der Fig. 2 und 3 durch ein in die Handhabe 10 integriertes Indikatorelement 28. Das Indikatorelement 28 zeigt mit Hilfe eines Warnelementes 29 an, ob eine für die automatische Restmontage ausreichende Betriebspannkraft Sₘᵢₙ vom Benutzer durch Betätigung der Handhabe 10 im Spannorgan 8 bzw. Zugmittel 8' erzeugt wurde.

Das Indikatorelement 28 ist in Abhängigkeit von der im Spannorgan 8 herrschenden Spannkraft S beweglich und in eine Stellung überführbar, in der das Warnelement 29 vom Benutzer während der Montage wahrnehmbar, also seh- und/oder fühlbar, positioniert ist. Das Warnelement 29 umfasst im vorliegenden Fall den in einer Alarmfarbe gehaltenen Rand der Handhabe 10 gegenüber dem Anschlag 17a. In der Endmontagestellung, wie sie in Fig. 4 dargestellt ist, ist das Warnelement 29 vom Anschlag 17a verdeckt und durch einen Benutzer nicht erkennbar.

Diese Funktion wird bei der Ausführungsform der Fig. 4 dadurch erreicht, dass im Unterschied zu den vorangegangenen Ausführungsformen der Anschlag 17a nicht am Sockelelement 16 sondern am Trägerelement 27 angeclipst und der Zapfen 15 nunmehr vom Trägerelement 27 ausgeformt ist. Das Sockelelement 16 ist durch Zug am Spannorgan mit der Spannkraft S in axialer Richtung gegenüber dem Trägerlement 27 gegen die Wirkung eines Federelements 30 in Richtung zum Trägerelement 27 gegenüber der Handhabe 10 und dem Sockelelement 16 verschieblich vom Zapfen 15 geführt. Die Länge L des Verschiebeweges des Sockelelements 16 ist durch Anschläge 31 begrenzt, die von den Rastelementen 32 gebildet sind, mit denen das Sockelement 16 an das Trägerelement 27 geclipst ist. Die Länge L ist kleiner als die Höhe der Sägezahnprofile 24, 25, so dass das Rastgesperre 23 durch die Verschiebung des Sockelelements 16 gegenüber der Handhabe 10 nicht entsperrt werden kann.

Das Federelement 30 kann wie dargestellt als Tellerfeder ausgebildet sein, insbesondere als Schnappfeder, die bei Überschreiten einer bestimmten Kraft plötzlich nachgibt. Die Tellerfeder weist (nicht gezeigt) einen Einschnitt für den Führungskanal 21 auf.

Die Federkonstante des Federelements 30 ist vorzugsweise größer als die Federkonstante des Federelements 17b, so dass in der Vormontagestellung, bei ungespanntem Spannorgan 8, das Sockelelement 16 unter Mitnahme der Handhabe 10 gegen die Wirkung des Federlelements 17b in Richtung weg vom Trägerelement 27 an die Anschläge 31 gedrückt ist. In dieser Stellung ist die Handhabe 10 über den der Andrückfläche 11a zugewandten Ende des Anschlages 17a hinaus bewegt und das Warnelement 29 in einer Ausnehmung 17c der Handhabe 10 für den Benutzer sichtbar.

Spannt der Benutzer ausgehend von der Vormontagestellung mittels der Handhabe 10 das Spannorgan 8, so wirkt eine zunehmende Spannkraft S im Spannorgan 8, die das Sockelelement 16 entgegen der Wirkung des Federelements 30 zum Trägerelement 27 zieht. Die Handhabe 10 folgt aufgrund der Federkraft des Federlements 17b der Bewegung des Sockelements 16 und bewegt sich ebenfalls in Abhängigkeit von der Spannkraft S relativ zum Anschlag 17a. Ist die für die sichere automatische Restmontage enforderlicheBetriebsspannkraft Sₘᵢₙ erreicht, so ist das Warnelement 29 durch den Anschlag 17a verdeckt.

Zum Abziehen der Gleitschutzvorrichtung 1 geht der Benutzer wie beim Ausführungsbeispiel der Fig. 2 und 3 vor: Die Handhabe 10 dient nach wie vor als Eintriegelungsschalter 26 und wird in Zugrichtung Z entgegen der Wirkung des Federelements 17b gezogen, bis sich das Rastgesperre 23 löst. Zunächst wird hierbei das Sockelelement 16 der Handhabe 10 unter Wirkung des Federelements 30 folgen, bis nach einem Hub L diese Bewegung durch die Anschläge 31 gestoppt wird. Mit der restlichen Hubbewegung wird dann das Rastgesperre 23 außer Eingriff gebracht. Der Hub H des Sockelelements 10 gegenüber dem Trägerelement 27 ist also mindestens so groß wie die Summe aus dem Hub L und der Höhe der Sägezahnprofile 24, 25.

Von den oben beschriebenen Ausführungsformen sind Abwandlungen möglich. So kann anstelle der in axialer Richtung A beweglichen Handhabe 10 diese in axialer Richtung A unbeweglich und stattdessen der stopfenförmige Anschlag 17 als Entriegelungsschalter 26 ausgestaltet sein, der beim Eindrücken das Rastgesperre 23 außer Eingriff bringt. Dies kann beispielsweise dadurch erfolgen, dass das Sockelelement 16 durch den Anschlag 12 in Andrückrichtung gegen ein Federelement bewegt und das Sägezahnprofil 24 außer Eingriff mit dem Sägezahnprofil 25 gebracht wird.

Selbstverständlich sind auch andere Ausgestaltungen des Spannmechanismus und der Selbstsperrung möglich. Beispielsweise können die Sägezahnprofile 24, 25 auch in Umfangsrichtung weisen und durch einen an der Umfangsfläche der Handhabe 10 angebrachten Knopf entriegelt werden. Außerdem kann eine Betätigung des Spannorgans über die Handhabe 10 durch zwischengeschaltete Getriebeelemente erfolgen, was allerdings konstruktiv aufwändiger ist. Schließlich kann über die Handhabe 10 auch direkt eine Schraub- oder Klemmverbindung mit dem Fahrzeugrad als Spannorgan gespannt und gelöst werden.

Anstelle oder zusätzlich eines bei noch nicht erreichter Mindestspannkraft Sₘᵢₙ sichtbaren Warnelements 29 kann auch ein Freigabelement vorgesehen sein, dass dem Benutzer positiv signalisiert, dass die Mindestspannkraft Sₘᵢₙ noch nicht erreicht ist.

Die Erfindung zeichnet sich dadurch aus, dass sämtliche Handgriffe, insbesondere das Andrücken und Spannen bei der Vormontage und das Entriegeln und Abziehen bei der Demontage, allein an der Handhabe erfolgen können.

## Patentansprüche

1. Gleitschutzvorrichtung (1) für Fahrzeugräder (1') mit einer Befestigungseinrichtung (7), die ein wenigstens an einer Stelle am Fahrzeugrad festlegbares Spannorgan (8) und eine von Hand betätigbare und auf das Spannorgan (8) einwirkende Handhabe (10) aufweist, wobei die Handhabe (10) zusätzlich als ergonomisch ausgestaltetes Greifelement (10') zum Abziehen der Gleitschutzvorrichtung (1) vom und zum Andrücken der Gleitschutzvorrichtung (1) gegen das Fahrzeugrad (1') ausgestaltet ist, **dadurch gekennzeichnet, dass** die Befestigungseinrichtung (7) eine von der Handhabe (10) antreibbar ausgestaltete Aufwickeleinrichtung (19) umfasst, durch die das Spannorgan (8) aufwickelbar ist.

2. Gleitschutzvorrichtung (1) nach Anspruch 1, **dadurch gekennzeichnet, dass** die Handhabe (10) in eine im montierten Zustand in axialer Richtung (A) vom Fahrzeugrad (1') weg weisende, ergonomisch ausgestaltete Andrückfläche (11a) aufweist.

3. Gleitschutzvorrichtung (1) nach Anspruch 1 oder 2, **dadurch gekennzeichnet, dass** die Handhabe (10) ein im montierten Zustand zum Fahrzeugrad (1') weisende, ergonomisch ausgestattete Zugfläche (11 b) aufweist.

4. Gleitschutzvorrichtung (1) nach Anspruch 3, **dadurch gekennzeichnet, dass** die Zugfläche (11 b) von wenigstens einer Griff- und/oder Fingermulde (12, 13b) gebildet ist.

5. Gleitschutzvorrichtung (1) nach einem der Ansprüche 1 bis 4, **dadurch gekennzeichnet, dass** die Handhabe (10) sich im montierten Zustand im Wesentlichen pilzförmig vom Fahrzeugrad (1') weg erstreckt.

6. Gleitschutzvorrichtung (1) nach einem der Ansprüche 1 bis 5, **dadurch gekennzeichnet, dass** die Befestigungseinrichtung (7) einen durch die Handhabe (10) betätigbaren, selbstsperrenden Spannmechanismus (18) für das Spannorgan (8) aufweist und dass die Handhabe (10) einen von Hand betätigbaren, auf den Spannmechanismus (18) einwirkend ausgestalteten Entriegelungsschalter (26) umfasst.

7. Gleitschutzvorrichtung (1) nach einem der Ansprüche 1 bis 6, **dadurch gekennzeichnet, dass** die Handhabe (10) drehbar ausgestaltet ist.

8. Gleitschutzvorrichtung (1) nach einem der Ansprüche 1 bis 7, **dadurch gekennzeichnet, dass** die Handhabe (10) in wenigstens zwei unterschiedlichen Betätigungsrichtungen (U, Z) beweglich geführt ist, wobei in der einen Betätigungsrichtung (U) der Spannmechanismus (18) antreibbar und in der anderen Betätigungsrichtung (Z) der Spannmechanismus (18) entriegelbar ist.

9. Gleitschutzvorrichtung (1) nach Anspruch 8, **dadurch gekennzeichnet, dass** die Betätigungsrichtung (Z) zum Entriegeln des Spannmechanismus (S) im montierten Zustand in axialer Richtung (A) weg vom Fahrzeugrad (1') weist.

10. Gleitschutzvorrichtung (1) nach einem der Ansprüche 1 bis 9, **dadurch gekennzeichnet, dass** die Handhabe (10) in radialer Richtung (R) der Gleitschutzvorrichtung (1) mittig angeordnet ist.

11. Gleitschutzvorrichtung (1) nach einem der Ansprüche 1 bis 10, **dadurch gekennzeichnet, dass** die Handhabe (10) ein Indikatorelement (28) aufweist, das in Abhängigkeit von der im Spannorgan (8) herrschenden Spannkraft (S) beweglich ausgebildet ist.

## Claims

1. Anti-skid device (1) for vehicle wheels (1'), having a mounting device (7), comprising a clamping element (8) that can be fixed at least at one location on the vehicle wheel and a handle (10) that can be actuated by hand and acts on the clamping element (8), wherein the handle (10) is additionally designed as an ergonomically designed gripper element (10') for pulling the anti-skid device (1) off and pushing the anti-skid device (1) onto the vehicle wheel (1'), **characterised in that** the mounting device (7) comprises a wind up device (19), designed so as to be driven by the handle (10), by way of which wind up device (19) the clamping element (8) can be wound up.

2. Anti-skid device (1) according to claim 1, **characterised in that** the handle (10) comprises an ergonomically designed press on face (11 a) which in the assembled state points away from the vehicle wheel (1') in axial direction (A).

3. Anti-skid device (1) according to claim 1 or 2, **characterised in that** the handle (10) comprises an ergonomically designed pulling face (11 b) which in the assembled state points towards the vehicle wheel (1').

4. Anti-skid device (1) according to claim 3, **characterised in that** the pulling surface (11 b) is formed by at least one grip and/or finger recess (12, 13b).

5. Anti-skid device (1) according to any one of claims 1 to 4, **characterised in that** in the assembled state the handle (10) extends away from the vehicle wheel (1') substantially in the form of a mushroom.

6. Anti-skid device (1) according to any one of claims 1 to 5, **characterised in that** the mounting device (7) comprises a self-locking clamping mechanism (18), which can be actuated by the handle (10), for the clamping element (8), and **in that** the handle (10) comprises an unlocking switch (26) that can be actuated by hand and is designed so as to act on the clamping mechanism (18).

7. Anti-skid device (1) according to any one of claims 1 to 6, **characterised in that** the handle (10) is designed so as to rotate.

8. Anti-skid device (1) according to any one of claims 1 to 7, **characterised in that** the handle (10) is guided movable in at least two different actuation directions (U, Z), wherein the clamping mechanism (18) can be driven in one actuation direction (U) and the clamping mechanism (18) can be unlocked in the other actuation direction (Z).

9. Anti-skid device (1) according to claim 8, **characterised in that** in the assembled state the actuation direction (Z) for unlocking the clamping mechanism (S) points away from the vehicle wheel (1') in the axial direction (A).

10. Anti-skid device (1) according to any one of claims 1 to 9, **characterised in that** the handle (10) is centrally arranged in the radial direction (R) of the anti-skid device (1).

11. Anti-skid device (1) according to any one of claims 1 to 10, **characterised in that** the handle (10) comprises an indicator element (28) which is designed so as to be movable as a function of the clamping force (S) prevailing in the clamping element (8).

## Revendications

1. Dispositif antidérapage (1) pour des roues de véhicule (1'), avec un dispositif de fixation (7) qui comporte un organe de tension (8) apte à être fixé à au moins un endroit de la roue de véhicule, et une poignée (10) apte à être actionnée à la main et agissant sur l'organe de tension (8), étant précisé que la poignée (10) est conçue en supplément comme un élément de préhension (10) de forme ergonomique pour enlever le dispositif antidérapage (1) de la roue de véhicule (1') et le presser contre celle-ci, **caractérisé en ce que** le dispositif de fixation (7) comprend un dispositif d'enroulement (19), conçu pour être entraîné par la poignée (10), grâce auquel l'organe de tension (8) peut être enroulé.

2. Dispositif antidérapage (1) selon la revendication 1, **caractérisé en ce que** la poignée (10) comporte une surface de pression (11a) de forme ergonomique qui, en position montée, est dirigée à l'opposé de la roue de véhicule (1'), dans sens axial (A).

3. Dispositif antidérapage (1) selon la revendication 1 ou 2, **caractérisé en ce que** la poignée (10) comporte une surface de traction (11b) de forme ergonomique qui, en position montée, est dirigée vers la roue de véhicule (1').

4. Dispositif antidérapage (1) selon la revendication 3, **caractérisé en ce que** la surface de traction (11b) est formée par au moins un creux de préhension et/ou pour les doigts (12, 13b).

5. Dispositif antidérapage (1) selon l'une des revendications 1 à 4, **caractérisé en ce que** la poignée (10), en position montée, s'étend globalement en forme de champignon à l'opposé de la roue de véhicule (1').

6. Dispositif antidérapage (1) selon l'une des revendications 1 à 5, **caractérisé en ce que** le dispositif de fixation (7) comprend un mécanisme de tension autobloquant (18), apte à être actionné par la poignée (10), pour l'organe de tension (8), et **en ce que** la poignée (10) comprend un élément de déverrouillage (26) apte à être actionné à la main et conçu pour agir sur le mécanisme de tension (18).

7. Dispositif antidérapage (1) selon l'une des revendications 1 à 6, **caractérisé en ce que** la poignée (10) est conçue pour pouvoir tourner.

8. Dispositif antidérapage (1) selon l'une des revendications 1 à 7, **caractérisé en ce que** la poignée (10) est guidée mobile dans au moins deux sens d'actionnement différents (U, Z), étant précisé que dans un sens d'actionnement (U), le mécanisme de tension (18) est apte à être entraîné et que dans l'autre sens d'actionnement (Z), le mécanisme de tension (18) est apte à être déverrouillé.

9. Dispositif antidérapage (1) selon la revendication 8, **caractérisé en ce que**, en position montée, le sens d'actionnement (Z) pour le déverrouillage du mécanisme de tension (S) est dirigé à l'opposé de la roue de véhicule (1'), dans le sens axial (A).

10. Dispositif antidérapage (1) selon l'une des revendications 1 à 9, **caractérisé en ce que** la poignée (10) est disposée au centre, dans sens radial (R) du dispositif antidérapage (1).

11. Dispositif antidérapage (1) selon l'une des revendications 1 à 10, **caractérisé en ce que** la poignée (10) comporte un élément indicateur (28) qui est conçu pour être mobile en fonction de la force de tension (S) qui règne dans l'organe de tension (8).
